## Europäisches Patentamt
## European Patent Office
## Office européen des brevets

(11) Numéro de publication: **0 330 590**
**A1**

# DEMANDE DE BREVET EUROPEEN

(21) Numéro de dépôt: **89420063.3**

(22) Date de dépôt: **21.02.89**

(51) Int. Cl.⁴: **G 02 B 6/06**
**B 29 D 11/00**

(30) Priorité: **26.02.88 FR 8802886**

(43) Date de publication de la demande:
**30.08.89 Bulletin 89/35**

(84) Etats contractants désignés:
**BE DE ES FR GB IT**

(71) Demandeur: **Baron, Jackie Jean**
**11 rue Jean-Marie Duclos**
**F-69005 Lyon (FR)**

(72) Inventeur: **Baron, Jackie Jean**
**11 rue Jean-Marie Duclos**
**F-69005 Lyon (FR)**

(74) Mandataire: **Laurent, Michel et al**
**Cabinet LAURENT 20, rue Louis Chirpaz B.P. 32**
**F-69131 Ecully Cédex (FR)**

(54) Procédé de fabrication d'un panneau ou capteur lumineux à fibres optiques et panneau ou capteur obtenu par ce procédé.

(57) La présente invention concerne un procédé de fabrication d'un panneau ou capteur lumineux à fibres optiques et le panneau ou capteur ainsi obtenu.

Il est caractérisé en ce que le panneau ou capteur et ses fibres optiques sont réalisés simultanément en une même succession d'opérations qui consiste :
- à réaliser une matrice (1) perforée ;
- à recouvrir cette matrice en position horizontale d'une couche de produit thermofusible constitutif des fibres optiques portée à sa température de fusion, de manière que le produit coule à travers les perforations (3) de la matrice (1) pour former un faisceau de fibres (6) verticales de longueur réduite, pendant sous cette matrice (1) ;
- à étirer ce faisceau de fibres ;
- à gainer ces fibres au moyen d'un produit auxiliaire de gainage ;
- et enfin à rassembler les extrémités libres de ces fibres en faisceau optique (18) d'amenée ou de transmission de signaux lumineux.

FIG. 6

EP 0 330 590 A1

## Description

### PROCEDE DE FABRICATION D'UN PANNEAU OU CAPTEUR LUMINEUX A FIBRES OPTIQUES ET PANNEAU OU CAPTEUR OBTENU PAR CE PROCEDE.

La présente invention se rapporte à un procédé de fabrication d'un panneau ou capteur lumineux à fibres optiques, ainsi qu'à un panneau ou capteur lumineux à fibres optiques obtenu par ce procédé.

Un panneau à fibres optiques est un dispositif d'affichage lumineux, de signalisation ou de décoration qui se présente sous la forme d'une plaque dont la face avant généralement plane, constitue l'aboutissement d'un plus ou moins grand nombre de fibres optiques qui traversent d'avant en arrière l'épaisseur de cette plaque pour émerger, par leur extrémité libre, à fleur de cette face avant qui constitue la surface destinée à être vue.

A l'arrière et à distance de cette plaque, ces fibres optiques sont compactées en un faisceau à fibres optiques. Ce faisceau reçoit des signaux lumineux représentatifs d'un affichage ou autre image, cette image étant reproduite à grande échelle sur la face avant du panneau.

Un capteur lumineux à fibres optiques est composé d'un panneau identique à celui qui vient d'être décrit, mais utilisant soit des fibres en matériau synthétique, soit des fibres minérales dans le cas où ce capteur est de forme parabolique, donc concentrant l'énergie solaire lumineuse et thermique.Ce capteur reçoit une information lumineuse sur sa face avant, cette information représentant par exemple l'intensité d'éclairement solaire ou ambiant, et transmet cette énergie lumineuse à distance à un organe de traitement ou directement à un panneau à fibres optiques par l'intermédiaire de son faisceau à fibres optiques. La différence avec le panneau à fibres optiques précité n'est donc essentiellement qu'une différence de fonction. Dans ce qui suivra, tout ce qui sera dit à propos d'un panneau à fibres optiques s'appliquera également à un capteur à fibres optiques.

Dans un panneau à fibres optiques, chaque fibre optique traverse donc l'épaisseur du panneau jusqu' à déboucher sur la face avant, visible, de celui-ci. La réalisation de ces panneaux est actuellement effectuée en introduisant, par des moyens manuels ou robotisés, l'une des extrémités libres de chaque fibre optique dans un logement prévu à cet effet dans une plaque plane perforée, apte à constituer la plaque avant du panneau ou capteur lumineux. Un tel procédé a pour inconvénients d'être soit long et fastidieux, s'agissant d'une réalisation manuelle, soit trop complexe et coûteux, s'agissant d'une réalisation robotisée, de sorte qu'il est finalement mal adapté à une exploitation industrielle rentable, d'autant plus qu'il consiste en une fabrication de fibres optiques indépendante de celle du panneau ou capteur optique.

En outre, ce procédé ne permet pas de réaliser des panneaux de taille importante (par exemple 12 m²) qui, pour avoir une définition optique correcte, doivent être constitués d'un très grand nombre de fibres (environ 180 000). Or, l'implantation fibre par fibre, de façon manuelle ou même robotisée, nécessiterait une durée incompatible avec les impératifs industriels et économiques.

Par ailleurs, dans le panneau à fibres optiques obtenu par un tel procédé, décrit par exemple dans le brevet US-A-3 853 658, l'extrémité de chaque fibre optique introduite dans la plaque avant du panneau ne diffuse la lumière que sur un champ angulaire réduit. Ceci est dû au fait que la fibre optique obtenue par fabrication linéaire traditionnelle est gainée sur toute sa longueur, y compris sur son extrémité. Par conséquent, l'image formée sur un tel panneau présente des points "noirs" ou zones d'ombre altérant sa qualité. On ne peut remédier à cela que par une opération extrêmement fastidieuse de façonnage de chacune des extrémités des fibres, de manière à augmenter leur champ angulaire de diffusion jusqu'à des valeurs d'angle supérieures ou égales à 70°. Le résultat obtenu reste néanmoins insatisfaisant.

L'invention vise à remédier à ces inconvénients. Elle se rapporte à cet effet à un procédé de fabrication d'un panneau ou capteur lumineux à fibres optiques, dans lequel le panneau ou capteur lumineux et ses fibres optiques sont réalisés simultanément en une même succession d'opérations qui consiste :

- à réaliser une matrice pouvant être destinée à former la plaque avant du panneau ou capteur à fibres optiques, cette matrice résistant à la température étant perforée d'orifices, qui sont répartis selon un quadrillage à angles droits et qui sont de diamètres égaux à ceux souhaités pour l'extrémité, côté panneau, des fibres ;

- à recouvrir cette matrice en position horizontale d'une couche du produit thermofusible constitutif des fibres optiques portée de manière connue à sa température de fusion, de manière que le produit coule, par gravité, précédé ou non d'une phase d'amorçage, à travers les orifices de la matrice pour former un faisceau de fibres verticales de longueur réduite , pendant sous cette matrice ;

- à stopper la fusion avant que la couche de produit ne se soit totalement consommée, laissant ainsi une couche résiduelle sur la plaque ;

- à étirer le faisceau de fibres tout en le chauffant à une température au moins égale à sa température de ramollissement, jusqu'à obtenir une longueur voulue ;

- à gainer ces fibres au moyen d'un produit auxiliaire de gainage ;

- à rassembler les fibres en un faisceau homogène apte à constituer au niveau de son extrémité libre une fenêtre optique d'amenée ou de transmission de signaux lumineux.

Suivant une caractéristique avantageuse de l'invention, le produit constitutif des fibres se présente sous la forme d'une plaque disposée sur la matrice perforée et amenée ensuite en fusion.

Selon une autre caractéristique de l'invention, la matrice perforée est placée dans un cadre de manière à former avec celui-ci une cuvette de profondeur donnée, ajustée pour que l'espace de remplissage, laissé disponible, détermine la quantité de matière thermofusible à utiliser, le chauffage destiné à assurer son ramollissement étant assuré par rayonnement infrarouge et/ou par air filtré et réchauffé, ou tout autre procédé connu pour cette application.

Suivant une variante de mise en oeuvre du procédé, la couche résiduelle non fluide sur la plaque est éliminée totalement, tandis que les fibres sont incluses, sur une partie de leurs longueurs émergeant directement sous la plaque, dans un panneau constitué en un matériau liant apte à les maintenir dans des positions relatives identiques à celles définies par la plaque. Cette dernière peut alors être retirée.

Ces dispositions permettent d'obtenir un panneau ou capteur dont les extrémités situées dans la plaque sont exemptes de gainage. Dans le cas de panneaux lumineux, le champ angulaire de diffusion de chaque fibre est alors supérieur à 70° et la qualité de l'image obtenue est ainsi très satisfaisante.

Par ailleurs dans ce procédé, le panneau ou capteur et ses fibres optiques sont obtenus simultanément par une même succession d'opérations. Il est clair que cela équivaut à un gain de temps important pour la fabrication.

L'invention se rapporte également à un panneau ou capteur lumineux à fibres optiques réalisé conformément à ce procédé, ce panneau ou capteur étant revêtu, sur sa face avant, d'une couche de produit constitutif des fibres optiques qui est d'un seul tenant et sans solution de discontinuité avec les extrémités visibles de ces fibres optiques. Les fibres optiques d'un tel capteur ou panneau ont une forme légèrement tronconique, ce qui permet utilement de réduire considérablement les dimensions de la fenêtre d'émission et de limiter les pertes d'énergie lumineuse.

De toute façon, l'invention sera bien comprise, et ses avantages et autres caractéristiques ressortiront, au cours de la description suivante des deux exemples de réalisation d'un panneau lumineux à fibres optiques, à la lumière des figures annexées dans lesquelles :

    - la figure 1 montre, en perspective schématique, la phase de préparation ;

    - la figure 2 montre, en coupe verticale partielle, la phase de fusion et de coulée du produit ;

    - la figure 3 montre de même les phases suivantes d'allongement puis d'enrobage des fibres ;

    - la figure 4 schématise la phase de rassemblement et compactage du faisceau de fibres ;

    - la figure 5 est une vue en coupe selon V-V de la figure 4 ;

    - la figure 6 montre, en perspective partielle et partiellement cassée, ce panneau lumineux prêt à l'emploi et accessoirement équipé d'un capteur lumineux réalisé par le même procédé et ;

    - la figure 7 est une vue schématique en coupe verticale partielle d'un panneau ou capteur obtenu par une variante du procédé.

Pour faciliter la compréhension, les échelles respectives, notamment l'espacement entre deux fibres optiques contiguës, et l'épaisseur de la couche résiduelle ne sont pas respectées.

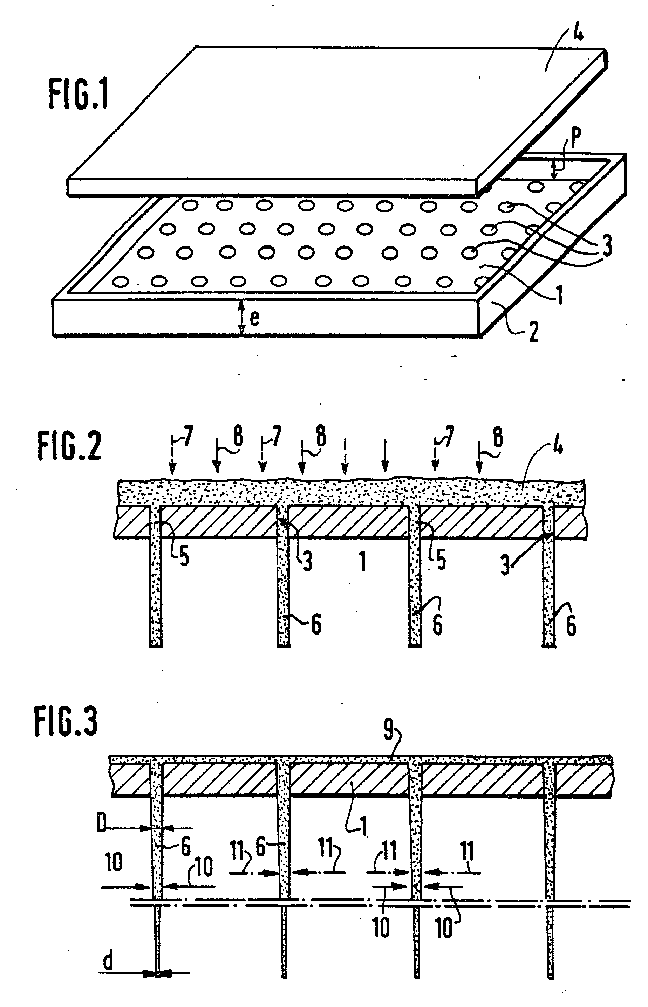

En se référant à la figure 1, on part, pour réaliser ce panneau à fibres optiques, d une plaque d'aluminium (1), de dimensions égales à celles désirées pour la plaque avant du panneau. Cette plaque (1), préalablement dégraissée et dépoussiérée, est percée d'un grand nombre de perforations transversales (3). Ces perforations sont réparties selon un quadrillage à angles droits, conforme à celui souhaité pour la répartition des points d'aboutissement des fibres optiques sur la face avant du panneau. Le diamètre de ces orifices est égal à celui souhaité pour l'extrémité, côté panneau, des fibres optiques. Cette plaque (1) doit résister aux conditions ultérieures de coulage. Ce peut donc être aussi une plaque en matériau composite, en céramique et ce, en fonction des utilisations finales envisagées.

La plaque ou matrice (1) est maintenue rigoureusement horizontale dans un cadre (2), en aluminium lui aussi, qui est fixé à un bâti non représenté. Ce cadre (2) est d'èpaisseur e supérieure à celle de la plaque (1), de sorte que l'ensemble (1,2) forme une cuvette rectangulaire de profondeur p.

Sur la plaque (1), on pose une plaque rectangulaire (4) en matériau acrylique polymérisé, correspondant au matériau constitutif des fibres optiques. La plaque (4) est d'épaisseur sensiblement égale à la profondeur p de la cuvette (1,2) et est de longueur et largeur sensiblement égales à celles de la plaque d'aluminium (1), au jeu près apte à permettre l'introduction de cette plaque (4) dans la cuvette (1,2).

Il est à noter que le matériau constitutif des fibres peut se présenter sous toute autre forme appropriée, notamment en granulés, en quantité prédosée.

Dans une variante, la plaque (4) peut être réalisée en un autre matériau, minéral notamment, susceptible de conduire à des fibres optiques.

L'opération suivante, schématisée figure 2, s'opère en milieu dépoussiéré exempt de particules de taille supérieure à 0,1 μm susceptibles d'altérer irrémédiablement la qualité des fibres optiques. Elle consiste à chauffer la plaque (4) pour la faire fondre en entraînant la coulée par gravité du produit fondu, en (5) par les perforations (3), ce qui engendre la formation de filaments verticaux (6), qui pendent sous la matrice (1) jusqu'à une distance d'un à trois mètres sous celle-ci. La fusion de la couche de matière acrylique (4) est réalisée en chauffant la matrice d'aluminium (1) et la couche (4) elle-même au moyen de rayons infrarouges (7), ce qui évite de brasser l'air ambiant, ou par des jets (8) d'air chaud pulsé, préalablement filtré.

Ce chauffage est arrêté lorsque l'épaisseur de la couche (4) est devenue assez fine pour ne laisser subsister sur la matrice (1) qu'une couche résiduelle (9) (figure 3) d'épaisseur prédéterminée, par exemple de l'ordre du millimètre. Afin d'éviter que l'inertie calorifique emmagasinée dans la matière acrylique et dans la matrice (1) n'entraîne la fusion totale de la couche (9), on procède à un refroidissement rapide de cette dernière au moyen de jets d'air froid préalablement filtré.

A titre d'exemple, on peut signaler que si la couche résiduelle (9) présente une épaisseur inférieure à un millimètre, l'air froid insufflé à sa surface est à une température de 10°C.

La profondeur p de la cuvette (1,2) (figure 1) est ajustée pour que l'espace de remplissage qu'elle laisse disponible détermine la quantité de matière acrylique à utiliser. Cette quantité de matière peut être également prédéterminée par l'épaisseur de la plaque (4).

De façon équivalente, la matière synthétique polymérisée peut être prédosée et portée en fusion avant sa mise en place sur la matrice (1).

En revenant sur la figure 3, l'opération suivante consiste à allonger les fibres (6) jusqu'à obtenir une longueur de 5 à 20 mètres par exemple. Pour ceci, on commence à chauffer ces fibres pendantes (6), sous la matrice (1) qui est maintenue froide, jusqu'à ce que leur matière soit devenue malléable. Ce chauffage est par exemple effectué de manière connue par des jets (10) d'air filtré et réchauffé à une température comprise entre 100 et 250°C. Lorsque ces fibres (6) ont atteint leur température de ramollissement, il est exercé une traction linéaire, par exemple de 10 à 50 g/mm$^2$ pour une température des fibres de l'ordre de 190°C sur l'ensemble de fibres (6), jusqu'à obtention de la longueur voulue. On obtient alors un ensemble de fibres de forme tronconique très allongée, ayant un diamètre initial D égal à celui fixé par les perforations (3), et un diamètre final d beaucoup plus réduit. La température d étirage varie en fonction de la nature du matériau constitutif (4).

L'opération d'amorçage du coulage des filaments (6) à travers les orifices (3) s'effectue de manière connue, par exemple en exerçant une pression sur la face supérieure de la plaque (4) ou une dépression sur sa face inférieure.

L'étirage est effectué de manière connue en filage-extrusion. On peut par tous moyens appropriés, tels que rouleaux motorisés étirer ces fibres. Le plus généralement, l'étirage s'effectue naturellement sous l'effet de la gravité.

Après refroidissement de l'ensemble, les fibres (6) sont gainées sur toute la longueur de leurs parties situées hors de la matrice (1) par trempage ou par projection de jets (11) d'une solution pulsérisée, que l'on laisse durcir lorsque cette opération de revêtement est terminée. Cette solution, par exemple de l'acétate de polyvinyle, est de composition connue et posséde un indice de réfraction inférieur à celui des fibres (6).

Il est à noter que les fibres obtenues peuvent éventuellement être exemptes de gaine mécanique de protection.

Le réseau de fibres (6) est alors terminé, et il ne reste plus qu'à l'assembler et le compacter en un faisceau optique homogène dans lequel les fibres sont réparties de manière strictement conforme à leur répartition sur l'avant de la matrice (1).

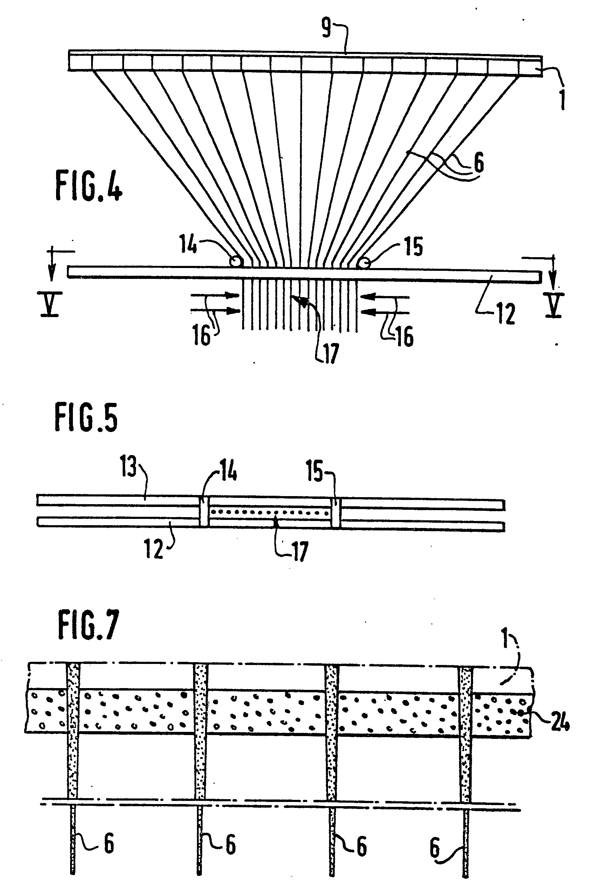

Cette opération est schématisée sur les figures 4 et 5. On coupe d'abord toutes les fibres (6) à la même longueur, par exemple par découpe au laser. Puis, au moyen d'un ensemble de deux régles parallèles (12,13) associées à deux curseurs (14,15), on regroupe par rangée les extrémités libres des fibres en les emprisonnant comme représenté entre les deux règles (12,13) d'une part (épaisseur d'une rangée) et les deux curseurs (14,15) d'autre part (longueur d'une rangée). On colle alors cette rangée par des jets (16) de colle à prise rapide, et l'on répète cette opération autant de fois qu'il y a de rangées de fibres à regrouper, chaque rangée correspondant préférentiellement au plus petit côté du rectangle formé par la matrice (1).

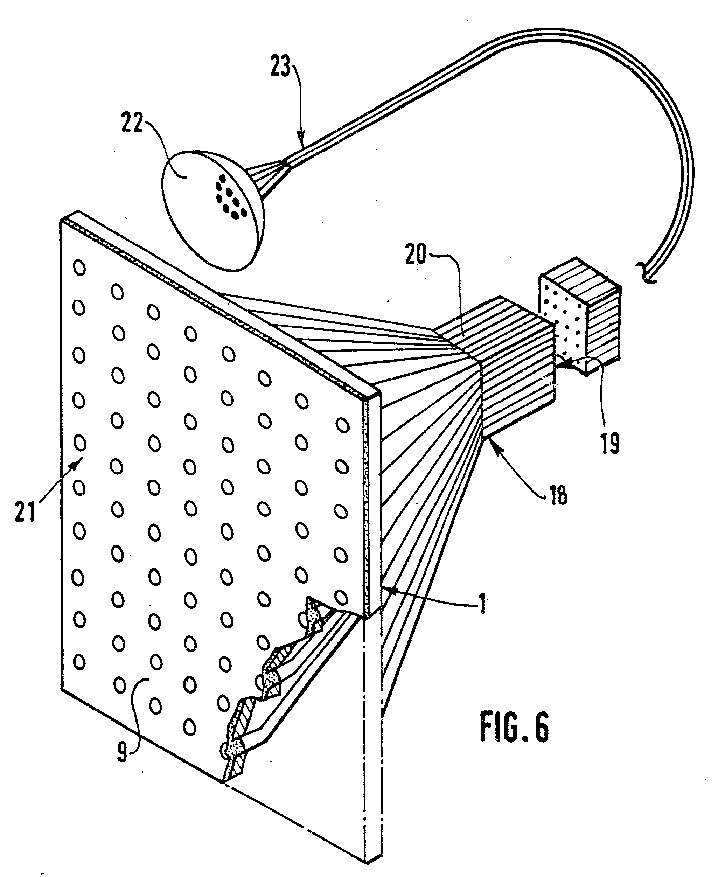

Lorsque toutes les rangées de fibres sont ainsi assemblées et collées, les plaques verticales obtenues (17) sont elles-mêmes assemblées et collées l'une sur l'autre afin de former un seul bloc homogène (20) au niveau des extrémités libres des fibres (6) constituant ainsi la fenêtre d'émission ou face d'extrémité (19) du faisceau optique (18) ainsi obtenu (figure 6).

Ces extrémités libres des fibres (6) sont réparties de façon homologue aux extrémités correspondantes de ces fibres (6) situées sur la face avant (21) du panneau (1). Autrement dit, pour une extrémité d'une fibre (6) située dans l'angle supérieur gauche du panneau, l'autre extrémité correspondante est située dans l'angle supérieur gauche de la fenêtre (19).

On procède alors au ponçage de finition de la face d'extrémité (19) du faisceau optique (18) (figure 6) opposée au panneau (1).

Le panneau à fibres optiques finalement obtenu est représenté grossièrement à la figure 6. Il comporte sur sa face avant (21) une couche protectrice (9), qui, en l'absence de solution de discontinuité fait corps avec les fibres optiques (6), et qui forme finalement un écran optique solidaire de chaque fibre et assurant une bonne répartition des flux lumineux.

L'épaisseur de la couche résiduelle (9) détermine deux fonctions, à savoir la rigidité en face avant du panneau et l'angle d'intersection des champs angulaires d'émission des fibres optiques et donc la définition optique de l'image restituée ou à restituer.

Au panneau (1) est aussi associé un capteur de lumière (22), de forme parabolique, qui est réalisé par le même procédé que ce panneau à fibres optiques, et qui transmet, de préférence, par son faisceau optique de sortie (23), l'information lumineuse environnante, d'intensité d'éclairement solaire par exemple, à un organe de régulation qui commande l'émission de lumière thermique émanant de toute source appropriée sur le panneau (1) à partir de la fenêtre (19), afin par exemple de corriger l'indice de luminosité de ce panneau (1) en fonction de la lumière ambiante.

Comme le montre schématiquement la figure 6, le capteur peut également fournir directement l'énergie lumineuse à la fenêtre d'émission (19) du faisceau optique (18) par l'intermédiaire de son faisceau optique (23). Cette disposition à parabole (22) permet avanta geusement de réaliser des panneaux auto-alimentés, donc autonomes, ou à tout le moins de compenser un afflux trop important de lumière extérieure.

On obtient de la sorte des panneaux lumineux autonomes constitués au niveau de la face externe d'un panneau (9) proprement dit, plan ou bombé, de la face arrière duquel emmerge une pluralité de fibres optiques individuelles, parallèles entre elles, dont le matériau constitutif est identique à celui dudit panneau (9), et qui ne présentent pas de solution de discontinuité. Les extrémités libres de ces fibres (6), de diamètre inférieur au diamètre des fibres au voisinage immédiat du panneau (9), sont rassemblées de façon homologue en un faisceau optique (18), lui-même se prolongeant en une fenêtre d'émission (19).

Ainsi, la particularité d'un tel panneau réside dans l'absence de solution de discontinuité entre la couche résiduelle (9), c'est à dire la partie visible du panneau et la fenêtre d'émission (19).

Une variante du panneau conforme à l'invention est représentée au sein de la figure 7. Comme on peut le voir, il est procédé à l'inclusion des fibres (6) sur une partie de leurs longueurs émergeant directement de la face non visible de la matrice (1), représentée en traits mixtes sur la figure 7, dans un panneau (24). Celui-ci est réalisé à partir d'un matériau liant, notamment synthétique, tel qu'une mousse de polyuréthane compatible avec le produit de gainage des fibres (6), qui vient noyer une partie de la longueur des fibres de manière à les maintenir dans des positions relatives identiques à celles définies par la matrice (1).

Cette inclusion en face arrière de la matrice (1) du panneau joue essentiellement un rôle de rigidification de ce panneau, après la phase initiale de fabrication décrite précédemment.

En outre, elle permet éventuellement de retirer cette matrice (1) de façon à la récupérer pour son utilisation dans des fabrications ultérieures. Le panneau (24) présente donc sur sa face, préalablement en contact avec la matrice (1), les extrémités des fibres (6) en saillie, et constitue ainsi l'écran support de l'image. Dans ce cas, la couche résiduelle (9) a été totalement éliminée, par exemple par ponçage.

Pour réaliser cette variante, on coule tout d'abord la résine polyuréthane sur la face arrière de la matrice (1). Une fois le durcissement réalisé, on retourne le panneau et après avoir oté la couche résiduelle (9), notamment par ponçage, on enlève la matrice (1) par simple traction, libérant de fait les extrémités des fibres optiques (6) maintenues initialement dans les orifices (3), lesdites extrémités formant alors saillie sur la face avant du panneau (24).

Comme il va de soi, l'invention n'est nullement limitée à l'exemple de réalisation qui vient d'être décrit. La plaque perforée peut être en un autre métal que l'aluminium, et peut même être réalisée en matière plastique, résine, bois, ou autre matériau compatible avec celui utilisé pour les fibres et permettant de former la plaque avant. Il est préférable que le cadre (2) soit constitué en même matériau que la matrice (1), afin d'avoir la même contrainte mécanique quelle que soit la température. Les orifices (3) peuvent avoir une section quelconque autre que circulaire, par exemple carrée, triangulaire, en losage, multilobée ou autre. L'aspect de surface de cette couche protectrice (9) peut être rendu lisse ou granuleux, selon la granulométrie des abrasifs utilisés. Cette couche (9) peut être également teintée en surface ou subir un traitement contre les rayons ultra-violets. Elle peut être déformée, avec la matrice (1) éventuellement, afin d'obtenir une surface courbe concave ou convexe, notamment pour améliorer la résistance et augmenter le champ de diffusion.

Il ressort donc de la présente invention différents avantages, que les procédés connus à ce jour ne permettaient pas d'obtenir. On peut citer :
- un procédé facile et rapide à mettre en oeuvre, rendant de fait son coût d'industrialisation très compétitif ;
- l'absence de solutions de discontinuité entre fibres optiques et panneau, ce qui améliore de manière significative les qualités optiques de tels panneaux ;
- la possibilité d'obtenir des fenêtres d'émission très réduites, tout en conservant une excellente résolution, du fait de l'étirage des fibres.

De la sorte, les panneaux obtenus peuvent être utilisés dans toutes les applications connues. Ils sont notamment très bien adaptés à l'éclairage de locaux sensibles en lumière froide, c'est-à-dire en l'absence de dégagement de chaleur et en l'absence de source d'énergie électrique. De même, ils sont adaptés à l'éclairage ainsi qu'au transport d'images ou d'informations sous marin. Ils conviennent également à la signalisation, à l'affichage publicitaire, et ce éventuellement sans source d'énergie. Enfin, de par leurs qualités optiques nettement améliorées, ils peuvent être utilisés comme clavier fonctionnant par commande inerte.

## Revendications

1. Procédé de fabrication d'un panneau ou capteur lumineux à fibres optiques, **caractérisé** en ce que le panneau ou capteur et ses fibres optiques sont réalisés simultanément en une même succession d'opérations qui consiste :
- à réaliser une matrice (1) pouvant être destinée à former la plaque avant du panneau ou capteur à fibres optiques, cette matrice résistant à la température étant perforée d'orifices (3), qui sont répartis selon un quadrillage à angles droits et qui sont de diamètres D égaux à ceux souhaités pour l'extrémité, côté panneau, des fibres (6) ;
- à recouvrir cette matrice (1) en position horizontale d'une couche du produit (4) thermofusible constitutif des fibres optiques portée à sa température de fusion, de manière que le produit coule, par gravité, éventuellement précédé d'une phase d'amorçage, à travers les orifices (3) de la matrice (1) pour former un faisceau de fibres verticales (6) de longueur réduite, pendant sous cette matrice (1) ;
- à stopper la fusion avant que la couche de produit ne se soit totalement consommée, laissant ainsi une couche résiduelle (9) non fluide sur la matrice (1) ;

- à étirer le faisceau de fibres (6) tout en le chauffant à une température au moins égale à sa température de ramollissement, jusqu'à obtenir une longueur voulue ;

- à gainer ces fibres au moyen d'un produit auxiliaire de gainage ;

- à rassembler les fibres en un faisceau homogène (18) apte à constituer au niveau de son extrémité libre une fenêtre optique (19) d'amenée ou de transmission de signaux lumineux.

2/ Procédé selon la revendication 1, caractérisé en ce que le produit (4) constitutif des fibres optiques se présente sous la forme d'une plaque (4) disposée sur la matrice (1) et amenée ensuite en fusion.

3/ Procédé selon l'une quelconque des revendications 1 et 2, caractérisé en ce que la plaque perforée (1) est placée dans un cadre (2) de manière à former avec celui-ci une cuvette de profondeur p ajustée pour que l'espace de remplissage qu'elle laisse disponible détermine la quantité de matière thermofusible à utiliser, dont le chauffage destiné à la ramollir est assuré par rayonnement infra-rouge et/ou par air filtré et réchauffé.

4/ Procédé selon l'une quelconque des revendications I à 3, caractérisé en ce que l'étirement du faisceau de fibres (6) est assuré en chauffant ces fibres (6) à leur température de ramollissement, et en exerçant sur celles-ci une traction linéaire .

5/ Procédé selon l'une quelconque des revendications 1 à 4, caractérisé en ce que le rassemblement des fibres (6) est effectué par un dispositif à règles (12,13) et curseurs (14,15).

6/ Procédé selon la revendication 1, caractérisé en ce qu'il consiste de plus à inclure les fibres (6), sur une partie de leurs longueurs émergeant directement de la matrice (1), dans un panneau (24) constitué en un matériau liant, notamment synthétique, apte à les maintenir dans des positions relatives identiques à celles définies par la matrice (1).

7/ Procédé selon la revendication 6, caractérisé en ce qu'il consiste en outre :

- à éliminer totalement la couche résiduelle (9) de la matrice (1) ;

- à retirer la matrice (1) de telle sorte que les extrémités des fibres (6) soient en saillie par rapport au panneau (24).

8/ Panneau ou capteur lumineux à fibres optiques caractérisé :

- en ce qu'il comprend une matrice (1) dont la face avant (21) présente une couche (9) de produit constitutif des fibres optiques (6), qui est d'un seul tenant et sans solution de discontinuité avec les extrémités visibles de ces fibres optiques ;

- en ce que les dites fibres optiques (6) sont effilées depuis la dite matrice (1) jusqu'à leur extrémité libre ;

- et en ce que les dites extrémités libres et effilées sont rassemblées de façon homologue aux extrémités correspondantes de ces fibres (6) au niveau de la matrice (1) en un faisceau optique (18).

FIG.1

FIG.2

FIG.3

**FIG.4**

**FIG.5**

**FIG.7**

FIG. 6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 853 658  (R. NEY)<br>* Figures; colonne 1, lignes 16-22,27-43; colonne 2, lignes 33-41; colonne 3, lignes 58-68; colonne 5, lignes 45-57; revendications * | 1-4,8 | G 02 B   6/06<br>B 29 D  11/00 |
| A | FR-A-2 564 983  (C.E.A.)<br>* Figures; page 2, lignes 5-10,31-35; page 3, lignes 1-6; revendications * | 1-3 | |
| A | NAVY TECHNICAL DISCLOSURE BULLETIN, vol. 2, no. 7, juillet 1977, pages 15-20, Navy Case no. 61261; P.C. FLETCHER et al.: "Liquid crystal-fiber optic cockpit display"<br>* En entier * | 1 | |
| A | DE-A-2 132 047  (SIEMENS AG)<br>* Revendications * | 1 | |
| A | DE-A-2 143 895  (AMERICAN OPTICAL CORP.)<br>* Figures * | 1 | **DOMAINES TECHNIQUES RECHERCHES (Int. Cl.4)**<br><br>G 02 B   6/00<br>B 29 D  11/00 |

Le présent rapport a été établi pour toutes les revendications

| Lieu de la recherche | Date d'achèvement de la recherche | Examinateur |
|---|---|---|
| LA HAYE | 16-05-1989 | WESBY P.B. |